(19) Europäisches Patentamt
European Patent Office
Office européen des brevets

(11) **EP 2 500 170 A1**

(12) **EUROPEAN PATENT APPLICATION**
published in accordance with Art. 153(4) EPC

(43) Date of publication:
**19.09.2012 Bulletin 2012/38**

(51) Int Cl.:
***B32B 27/40*** *(2006.01)*    ***H01B 5/14*** *(2006.01)*
***H01B 13/00*** *(2006.01)*

(21) Application number: **10829858.9**

(22) Date of filing: **01.11.2010**

(86) International application number:
**PCT/JP2010/069405**

(87) International publication number:
**WO 2011/058898 (19.05.2011 Gazette 2011/20)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.11.2009 JP 2009257833**

(71) Applicant: **Toray Industries, Inc.**
**Tokyo, 103-8666 (JP)**

(72) Inventors:
• **SATO, Yoshikazu**
**Otsu-shi**
**Shiga 520-8558 (JP)**
• **WATANABE, Osamu**
**Otsu-shi**
**Shiga 520-8558 (JP)**

(74) Representative: **Hoefer & Partner**
**Pilgersheimer Straße 20**
**81543 München (DE)**

(54) **ELECTROCONDUCTIVE LAMINATE AND PROCESS FOR PRODUCTION THEREOF**

(57)    Provided is a conductive laminate of the present invention comprising a base resin layer and a conductive layer on at least one surface of a substrate, by stacking in the sequential order of the base resin layer and the conductive layer from the substrate side, and in which base resin layer comprises a resin including a urethane acrylate resin having a glycol skeleton, and a grafted resin having a hydrophilic group among side chains thereof.

A touch panel using the conductive laminate of the present invention exhibits good writing sense, high input sensitivity and favorable durability.

In addition, the conductive laminate of the present invention is preferably used for electrode members, which are employed in display products such as a liquid crystal display, an organic electro-luminescence, and an electronic paper as well as solar cell modules, and so forth.

[Fig. 1]

## Description

Technical Field

The present invention relates to a conductive laminate having a conductive layer on a base resin layer. More particularly, the present invention relates to a conductive laminate suitable for an electrode member used in a solar cell module and a display product such as a touch panel, a liquid crystal display, an organic electroluminescence, and an electronic paper.

Background Art

In recent years, a mobile phone, a game console, and the like, including a touch panel mounted thereon, have been propagated. The touch panel may be fabricated using a conductive material for an electrode. However, with progress of fine point inputting to a touch panel with a pen or the like, a conductive material used for the touch panel needs smooth writing or high input sensitivity, durability, and the like.

A conductive laminate prepared by bonding a non-conductive layer face of a base material ('substrate') having a conductive layer stacked on the surface thereof in a dry process with another substrate by inserting an adhesive layer therebetween, is used in a touch panel. The conductive laminate having the adhesive layer has good writing sense and good input sensitivity since the adhesive layer functions as a cushion. However, the conductive layer is stacked by a dry process requiring high operation costs and, further, due to the configuration using multiple substrates, the cost is increasing considerably and, therefore, production may not be achieved at low cost.

For a conductive laminate prepared by providing a cushion layer on a substrate and stacking a resin layer and a conductive layer thereon in this sequence, the resin layer is placed as a base layer required to stack the conductive layer. Thus, even though the conductive laminate was provided with the cushion layer, the cushion layer does not give cushioning effect.

For a conductive laminate prepared by stacking a resin layer, a layer having a smaller thickness than a substrate and different index of refraction, and a conductive layer on the substrate in this sequence, writing sense and input sensitivity are poor even if the layer laminated in plural has a small thickness.

For a conductive laminate prepared by providing a base layer on a substrate and stacking a conductive layer thereon, if the base layer has a considerably smaller thickness than the substrate, the conductive laminate does not give cushioning effect and has poor writing sense and input sensitivity.

A conductive laminate with a base layer including a polyurethane resin is known in related art (see Patent Literature 1). The conductive laminate with a base layer including a polyurethane resin lacks cushioning effect of the base layer and has poor writing sense and input sensitivity.

A conductive laminate with a base layer including a urethane acrylate resin is known in related art (see Patent Literature 2). The conductive laminate with a base layer including a urethane acrylate resin lacks cushioning effect of the base layer and has poor writing sense and input sensitivity.

A conductive laminate with a base layer including a urethane acrylate resin having a glycol skeleton is known in related art (see Patent Literature 3). The base layer including only the urethane acrylate resin has insufficient hydrophilic property on the surface thereof. Specifically, a conductive layer containing a conductive component, that includes a moisture-containing composition, may incur unevenness and/or defect when it is stacked on a base resin layer, deteriorate external appearance of a conductive laminate, cause poor surface conductivity in turn entailing poor input sensitivity.

Citation List

Patent Literature

Patent Literature 1: Japanese Patent Application Laid-Open (JP-A) No. 2008-243532
Patent Literature 2: JP-A No. 2007-42284
Patent Literature 3: JP-A No. 2009-302013

Summary of Invention

Technical Problem

The present invention is to provide a conductive laminate that can improve in writing sense and input sensitivity of a touch panel and, in addition, that can provide with favorable durability.

Solution to Problem

The present invention provides a conductive laminate comprising a base resin layer and a conductive layer on at least one surface of a substrate, by stacking in the sequential order of the base resin layer and the conductive layer from the substrate side, in which the base resin comprises a resin including; a urethane acrylate resin having a glycol skeleton in the structure of the resin, and a grafted resin having a hydrophilic group among side chains thereof.

Additionally, the present invention provides a method of producing a conductive laminate, comprising; forming a base resin layer on a substrate, and then, forming a conductive layer on the base resin layer, in which the base resin comprises a urethane acrylate resin having a glycol skeleton and a grafted resin having a hydrophilic group among side chains.

Advantageous Effects of Invention

A touch panel using the conductive laminate of the present invention is smooth in writing, and has high input sensitivity and favorable durability.

Moreover, the conductive laminate of the present invention can be preferably used in electrode members, which are applicable in association with display products such as a liquid crystal display, an organic electroluminescence, or an electronic paper, as well as a solar cell module.

Brief Description of Drawings

FIG. 1 is a cross-sectional schematic view of a conductive laminate according to an exemplary embodiment of the present invention.

FIG. 2 is a schematic view of a grafted resin having a hydrophilic group among side chains according to an exemplary embodiment of the present invention.

FIG. 3 is a schematic view of a linear structure of a conductive laminate according to an exemplary embodiment of the present invention, when observing from a conductive layer side.

FIG. 4 is a schematic view illustrating one example of a touch panel according to an aspect of the present invention.

FIG. 5 is a schematic view of a vertical fluidized bed reactor.

Description of Embodiments

Hereinafter, the present invention will be described in detail.

A conductive laminate of the present invention is a conductive laminate comprising a base resin layer and a conductive layer on at least one surface of a substrate, by stacking in the sequential order of the base resin layer and the conductive layer from the substrate side, in which the base resin comprises a resin including; a urethane acrylate resin having a glycol skeleton in the structure of the resin, and a grafted resin having a hydrophilic group among side chains thereof.

The substrate used in the conductive laminate of the present invention is preferably a base material having a high total luminous transmittance and, more preferably, a transparent substrate. Further, the substrate may be a base material having a total luminous transmittance of 80% or more, based on JIS K7361-1 (1997) and, more preferably, a base material having transparency of 90% or more.

The substrate used in the conductive laminate of the present invention is preferably a resin or glass. The substrate can be selected from most preferable ones in terms of transparency, durability, flexibility, or cost according to its use.

If the substrate is a glass, a soda glass commonly known in the art may be used. Examples of resins may include polyester such as polyethylene terephthalate and polyethylene naphthalate, polyamide, polyimide, polyphenylene sulfide, aramid, polypropylene, polyethylene, polylactate, polyvinyl chloride, polycarbonate, polymethyl methacrylate, alicyclic acryl resin, cyclo-olefin resin, triacetyl cellulose, a mixture of the resins and/or copolymer thereof. In particular, polyethylene terephthalate is preferably used.

The substrate may be a film or a base plate. The resin may be a uniaxially or biaxially stretched film. The substrate is preferably a film having a thickness of 250 $\mu$m or less in views of cost, productivity, easy handling, or the like. More preferably, a film having a thickness of 190 $\mu$m or less, further preferably, a film having a thickness of 150 nm or less, may be used in the substrate.

The substrate may be a single layer substrate or a combined multilayer substrate with a plurality of substrates stacked in order. For instance, a combined substrate of resin and glass, a combined substrate of two or more resins, or the like, may be used.

The substrate may be subjected to surface treatment, as required. For instance, physical treatment such as glow discharge, corona discharge, plasma treatment, and flame treatment may be executed or, otherwise, the substrate may be provided with a resin layer. In the case where the substrate is a film, a film having an easy-adhesive layer may be used.

The conductive laminate of the present invention comprises a base resin layer on at least one surface of a substrate, in which the base resin comprises a resin including; a urethane acrylate resin having a glycol skeleton in the structure of the resin, and a grafted resin having a hydrophilic group among side chains thereof. If a base resin layer is not provided, writing sense and input sensitivity are not enhanced and durability is deteriorated even where the conductive laminate is assembled into a touch panel.

The base resin layer in the conductive laminate of the present invention comprises a urethane acrylate resin having a glycol skeleton. Such a urethane acrylate resin is a resin having a urethane structure formed by reaction between a polyol and a multi-functional isocyanate, in which the reaction product has an acrylate end in its structure. The urethane acrylate resin is prepared by a preparation method including, for example; reacting a polyol having two or more hydroxyl groups in its molecular structure, such as diol, with an aliphatic, aromatic or alicyclic multi-functional isocyanate having two or more isocyanate groups in its molecular structure, such as diisocyanate; and then, reacting an end of a structure of the reaction product with an acrylate having a hydroxyl group in its molecular structure ('hydroxyl-functional acrylate') to seal the end of the structure.

The urethane acrylate resin contained in the base resin layer according to the present invention comprises a glycol skeleton. If the urethane acrylate resin without a glycol skeleton is used as a touch panel, writing sense and input sensitivity of the touch panel are not improved and durability is deteriorated.

Examples of the glycol skeleton may include an ethyleneglycol skeleton, a propyleneglycol skeleton, a diethyleneglycol skeleton, a butanediol skeleton, a hexanediol skeleton, a 1,4-cyclohexanedimethanol skeleton, a glycolic acid skeleton, a polyglycolic acid skeleton, and the like.

The glycol skeleton is preferably a polyethyleneglycol skeleton and/or polypropyleneglycol skeleton. Polyethyleneglycol and polypropyleneglycol are high molecular weight compounds prepared by polymerizing ethyleneglycol and propyleneglycol, respectively. Owing to a long-extended and combined linear structure, the above material becomes a more flexible urethane acrylate resin when it is coupled to the skeleton of the urethane acrylate resin, to thereby easily further improve writing sense and input sensitivity of the touch panel.

As described above, the urethane acrylate having a glycol skeleton may include, any one selected from, for example, Art Resin UN Series products (trade name, manufactured by Negami Chemical Industrial Co., Ltd.).

The urethane acrylate resin having the glycol skeleton may be prepared as a single unit or a combination of two or more thereof and contained in the base resin layer or, otherwise, such glycol skeletons may be reacted together in advance to couple the same into the skeleton of the urethane acrylate resin, thereby preparing an urethane acrylate resin, which has two or more glycol skeletons in the same structure, and rendering the same to be contained in the base resin layer.

According to the present invention, a urethane acrylate resin having a polyethyleneglycol skeleton and/or polypropyleneglycol skeleton is preferably contained as a single unit or a mixture in the base resin layer. Further, preferably, copolymerizing a polyethyleneglycol skeleton with a polypropyleneglycol skeleton in advance may couple the same into the skeleton of the urethane acrylate resin, to thereby prepare a urethane acrylate resin, which has both the polyethyleneglycol skeleton and the polypropyleneglycol skeleton in the same structure, and render the same to be contained in the base resin layer. If the urethane acrylate resin including the polyethyleneglycol skeleton or the polypropyleneglycol skeleton is used as a touch panel, functional effects of more improving writing sense and input sensitivity of the touch panel can be sufficiently attained.

If the base resin layer includes a urethane acrylate resin having a glycol skeleton, writing sense and input sensitivity of a touch panel are enhanced and favorable durability is obtained.

The urethane acrylate resin may include a polyol part as a flexible skeleton and an acrylate part as a rigid skeleton. Specifically, the glycol skeleton is incorporated into the polyol part, on the basis of the following two aspects in which:

(1) a molecular structure has high linearity; and
(2) since oxygen in the molecular structure is not condensed by any element (for example, hydrogen) other than carbon and does not accept space hindering by a sterically hindered element other than carbon, a free space around oxygen is enlarged. It is presumed from the above results that more flexible urethane acrylate resin may be obtained. Accordingly, it is considerable that adding the urethane acrylate resin having the glycol skeleton to a base resin layer may render the base resin layer to be easily deformed by load applied when inputting with a pen or a finger.

Meanwhile, it is considerable that the acrylate part is rigid and, hence, acts against deformation and functions to rapidly return to its original condition during load opening. As a result thereof, it is presumed that the base resin layer exhibits cushioning effect to the load applied by inputting, to thereby achieve favorable writing sense. However, the present invention is not particularly limited to the presumption.

Regarding the urethane acrylate resin, the number of functional groups at an acrylate part in one urethane acrylate molecule is preferably 2. Since rigidity may be easily endowed to the acrylate part, the urethane acrylate resin may be liable to be rigid if multi-functional groups having tri-functional groups or more are present in one urethane acrylate molecule. Further, since cushioning effects of the base resin layer are occasionally reduced, it may require control on an increase in thickness of the base resin layer and the like, to improve writing sense and input sensitivity of the touch panel.

On the other hand, if the number of functional groups in the acrylate part is 2, a ratio of the acrylate part present in one urethane acrylate molecule, that is, the rigid part is small and, hence, a urethane acrylate resin to be obtained may be more flexible and cushioning effects of the base resin layer may be further increased. Consequently, it is easy to highly enhance writing sense and input sensitivity of the touch panel.

The number of functional groups in the acrylate part may be adjusted to the number of isocyanate functional groups of any aliphatic, aromatic and/or alicyclic multi-functional isocyanate used in synthesizing the urethane acrylate resin. Further, kinds or types of the acrylate part may include, for example, acrylate, methacrylate, or the like.

More particularly, as the di-functional urethane acrylate, any product selected from, for example, Art Resin, UN series (trade name, manufactured by Negami Chemical Industrial Co. Ltd.) may be used.

For the urethane acrylate resin used in the present invention, it is preferable to combine an acrylate part with the other acrylate part through polymerization. When the acrylate part is combined with the other acrylate part, durability may be further enhanced. Methods of combining such acrylate parts may include, for example; adding a urethane acrylate resin as well as a photo-polymerization initiator known in the art into a base resin layer, and then, irradiating the mixture with active electron beam such as UV light, visible light, or electron beam, to react the same. The photo-polymerization initiator refers to a material that absorbs light in UV region, light in visible region, electron beam, or the like, generates active species such as radical species, cation species, and anion species, and hence initiates polymerization of a resin. As particular examples of the photo-polymerization initiator, any products selected from Ciba (registered trademark) IRAGACURE (registered trademark) series (manufactured by Ciba Japan Co. Ltd.) may be used. The photo-polymerization initiator may be used alone or, otherwise, in combination of two or more thereof.

With regard to the combination of acrylate parts according to the present invention, if the urethane acrylate resin contained in the base resin layer is one type alone, the same acrylate parts in the urethane acrylate resin may be combined. If the base resin layer includes two types or more of urethane acrylate resins, the same urethane acrylates or different urethane acrylate resins may be combined. Further, in the case where a component containing an acrylate part except the urethane acrylate resin is included in the base resin layer, the urethane acrylate resin may be combined with the component containing the acrylate part except the urethane acrylate resin.

Content of the urethane acrylate resin in the base resin layer may be 10% or more by weight, preferably, 15% or more by weight, more preferably, 20% or more by weight, particularly preferably, 50% or more by weight, and most preferably, 80% or more by weight, in relation to a total weight of the base resin layer.

The base resin of the conductive laminate according to the present invention comprises a grafted resin having a hydrophilic group in a side chain.

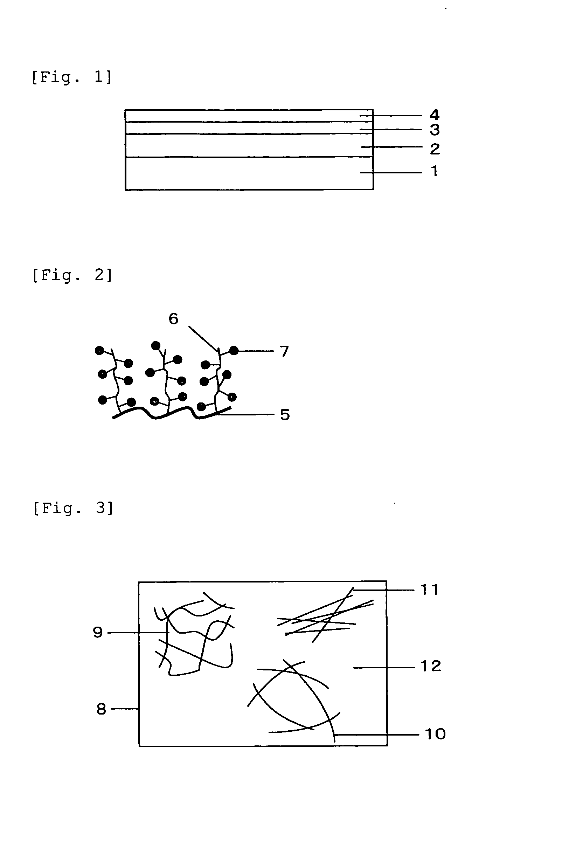

The grafted resin in the present invention refers to a block polymerized resin and a structure thereof is illustrated in FIG. 2. FIG. 2 illustrates a branch-shaped combination of branched side chains from a network polymer as a main chain. The grafted resin may include a variety of forms depending upon types of the network polymer or side chain, degree of polymerization, molecular weight, functional groups in the end of molecular chain, the molecular chain or the branched chain, cross-linking degree, and the like. In addition, according to types of the network polymer or side chain, degree of polymerization, molecular weight, or the like, the grafted resin may have a variety of performances. The grafted resin used in the present invention is a grafted resin having a hydrophilic group in a side chain. Such a grafted resin having a hydrophilic group in the side chain preferably contains a branched side chain and, even if the network polymer is present in the base layer, the hydrophilic group reaches the surface of the base and hence render the base layer to have wettability.

According to the present invention, if a graft-structural resin having a hydrophilic group in a side chain is included in the base resin layer, the surface of the base resin layer is modified and hence become to render a water-dispersed coating solution containing conductive components to be easily and homogeneously applied, without repelling the solution. Consequently, writing sense and input sensitivity is enhanced, thus enabling the supply of conductive laminates having favorable appearance and quality with high productivity. Alternatively, in the case in which the graft-structural resin having a hydrophilic group in a side chain is not included in the base resin layer, due to failures such as unevenness or defect after preparing a conductive laminate, writing sense and input sensitivity cannot be improved.

For the grafted resin used in the present invention, the hydrophilic group may include, for example; a hydroxyl group (-OH), a carboxyl group (-COOH), a sulphonic acid group (-SO$_3$H), a phosphoric acid group (H$_2$PO$_4$-), an amino group (-NH$_2$), or the like. The grafted resin includes a hydrophilic group in which H$^+$ in the hydrophilic group may be in a state partially including a counter-cation such as Na$^+$ and K$^+$ (that is, -ONa, -COONa, and -SO$_3$Na). Meanwhile, such a hydrophilic group may be present alone, or two or more thereof may be present in a branched side chain. As the grafted resin, a copolymer and/or mixture of two grafted resins having different hydrophilic groups may be used.

More particularly, the grafted resin having a hydrophilic group in a side chain as described above may include, for example; CHEMTREE (registered trademark) series L-20, L-40M, LH-448, or the like (manufactured by Soken Chemical and Engineering Co. Ltd.).

The network polymer in the grafted resin used in the present invention may include, for example, polyester resin such as polyethylene terephthalate and polyethylene naphtalate, polycarbonate resin, polyurethane resin, acryl resin, methacryl resin, epoxy resin, polyamide resin, polyimide resin, polyethylene resin, polypropylene resin, polystyrene resin, polyvinyl acetate resin, nylon resin, melamine resin, phenol resin, fluorine resin, and the like. The grafted resin may be used alone or as a copolymer and/or mixture of two or more thereof. In addition, according to its use, the grafted resin may include a partial cross-linking structure.

The network polymer of the grafted resin preferably includes a functional group. More preferably, a functional group with reactive properties to form a composite with resins or components contained in the base resin layer, respectively, a functional group compatible with an organic solvent or water, and the like, are present in the network polymer.

The functional group of the network polymer in the grafted resin may include, for example: a linear alkyl group; a branched alkyl group; a cycloalkyl group; an alkenyl group such as vinyl, aryl, and hexenyl; an aryl group such as phenyl, tollyl, xylyl, styryl, naphthyl, and biphenyl; an aralkyl group such as benzyl and phenetyl; other aromatic groups having heterocyclic rings or their ring-open groups such as lactone, oxazole, and imidazole; an alkoxy group such as methoxy, ethoxy, and isopropoxy; an acetoxy group; an acryl group; a methacryl group; an acryloxy group; a methacryloxy group; an oxycarbonyl group such as aryloxycarbonyl and benzyloxycarbonyl; an epoxy group; an isocyanate group; a hydroxyl group; a carboxyl group; a sulfur group; a phosphoric acid group; an amino group; a sulfur-containing functional group such as mercapto and sulfide; a nitrogen-containing functional group such as ureido and ketimino; a halogen-containing functional group such as fluoroalkyl. Among the functional groups, hydrophilic groups such as the hydroxyl group, carboxyl group, sulfur group, phosphoric acid group, and amino group, may be preferably used. The functional group of the network polymer in the grafted resin may include at least one randomly selected and used on the basis of use or required characteristics thereof or a mixture of two or more thereof, without being particularly limited to the foregoing.

The grafted resin contained in the base resin layer may be present in any form in the base resin layer. In other words, the grafted resin may be contained in a simply mixed state or present as a material having a combination with the urethane acrylate resin or other components in the base resin layer.

A content of the grafted resin may range from 5% to 90% by weight and, preferably, 10% to 80% by weight, in relation to a total weight of the base resin layer. If it is less than 5% by weight, effects of modifying the surface of the base resin layer may be slight. On the other hand, when the content is more than 90% by weight, a touch panel may occasionally attain only a little improvement in writing sense and input sensitivity, depending upon type or structure of the urethane acrylate resin or bonding form thereof.

In the conductive laminate of the present invention, a thickness 'T' of the substrate and a thickness 't' of the base resin layer preferably satisfy the following equations.

$$0.040 \leq t/T \leq 0.080$$

If the conductive laminate, in which the thickness T of the substrate and the thickness t of the base resin layer have satisfied the above equation, is assembled into the touch panel, the base resin layer may be easily deformed with high efficiency by the load applied when inputting with a pen or finger, to hence render the touch panel to have more improved writing sense and input sensitivity. The t/T value preferably ranges from 0.050 to 0.70.

The conductive laminate of the present invention comprises stacking a base resin layer and a conductive layer, in sequential order of the base resin layer and the conductive layer from the substrate side. If the conductive layer is not contained, conductive properties are not exhibited.

According to the present invention, the component in the conductive layer preferably has a linear structure. Such a linear structure according to the present invention refers to a structure having a ratio of the length of a short axis to the length of a long axis, that is, an aspect ratio (= the length of a long axis/the length of a short axis) of more than 1 (on the other hand, for example, a spherical form has an aspect ratio = 1). The linear structure may include, for example; a fiber-shaped conductor, a needle-shaped conductor such as whisker. The length of the short axis may range from 1 nm to 1,000 nm (1 $\mu$m). Further, the length of the long axis may be a length in which an aspect ratio (= the length of the long axis/the length of the short axis) may be more than 1, in relation to the length of the short axis. If the length of the long axis ranges from 1 $\mu$m to 100 $\mu$m (0.1 mm), both of optical feature and conductive property may be compatible with each other, thus being preferable.

The linear structure may be used alone, or in combination of plural structures as a mixture. Moreover, alternative micro to nano-sized conductive materials may be added thereto, as required.

The fiber-shaped conductor may include a carbon-based fiber conductor, a metal-based fiber conductor, a metal oxide-based fiber conductor, or the like. The carbon-based fiber conductor may include polyacrylonitrile-based carbon fibers, pitch-based carbon fibers, rayon-based carbon fibers, glass-shaped carbon, carbon nanotube, carbon nanocoil, carbon nanowire, carbon nanofiber, carbon whisker, graphite fibril, and the like. The metal-based fiber conductor may include fiber-shaped or nanowire-shaped metals or alloys thereof, which are prepared by using, for example; gold, platinum, silver, nickel, silicon, stainless steel, copper, brass, aluminum, zirconium, hafnium, vanadium, niobium, tantalum, chromium, molybdenum, manganese, technetium, rhenium, iron, osmium, cobalt, zinc, scandium, boron, gallium, indium, silicon (silicium), germanium, tin, magnesium, or the like. The metal oxide-based fiber conductor may include fiber-shaped or nanowire-shaped metal oxides and/or metal oxide composites, which are prepared by using $InO_2$, $InO_2Sn$, $SnO_2$, $ZnO$, $SnO_2$-$Sb_2O_4$, $SnO_2$-$V_2O_5$, $TiO_2(Sn/Sb)O_2$, $SiO_2(Sn/Sb)O_2$, $K_2O$-$nTiO_2$-$(Sn/Sb)O_2$, $K_2O$-$nTiO_2$-$C$, and the like. The fiber-shaped conductor may also be subjected to surface treatment.

The fiber-shaped conductor may further include a material prepared by coating or vapor-depositing the surface of a non-metal material such as a plant fiber, a synthetic fiber, or an inorganic fibers with, for example; gold, platinum, silver, nickel, silicon, stainless steel, copper, brass, aluminum, zirconium, hafnium, vanadium, niobium, tantalum, chromium, molybdenum, manganese, technetium, rhenium, iron, osmium, cobalt, zinc, scandium, boron, gallium, indium, silicon, germanium, tin, magnesium, $InO_2$, $InO_2Sn$, $SnO_2$, $ZnO$, $SnO_2$-$Sb_2O_4$, $SnO_2$-$V_2O_5$, $TiO_2(Sn/Sb)O_2$, $SiO_2(Sn/Sb)O_2$, $K_2O$-$nTiO_2$-$(Sn/Sb)O_2$, $K_2O$-$nTiO_2$-$C$, or carbon nanotubes.

The conductive laminate of the present invention preferably uses carbon nanotubes as the fiber-shaped conductor, in view of optical properties such as transparency and conductivity.

In this regard, the following description will be given of explaining the carbon nanotube. According to the present invention, the carbon nanotube used in the component of the conductive layer may be any one among a single-layer carbon nanotube, a double-layer carbon nanotube, triple-layer or more carbon nanotubes. The nanotube is preferably one having a diameter ranging from 0.3 to 100 nm and a length ranging from about 0.1 to 20 $\mu$m. In order to increase the transparency of the conductive laminate while reducing a surface resistivity thereof, a single-layer carbon nanotube or double-layer carbon nanotube having a diameter of 10 nm or less and a length in the range of 1 to 10 $\mu$m is more preferably used.

It is preferable that a carbon nanotube assembly contains as few impurities as possible such as amorphous carbon or catalyst metals. If such impurities are contained in the carbon nanotube, purification may be suitably executed by acid treatment or heating.

The carbon nanotube may be synthesized and produced through arc discharge, laser ablation, catalytic chemical vapor deposition (a method that uses a catalyst including a carrier and a transition metal supported thereby, among chemical vapor deposition methods), or the like. According to the catalytic chemical vapor deposition having excellent productivity and decreasing generation of impurities such as amorphous carbon, carbon nanotubes may be preferably prepared.

According to the present invention, carbon nanotube dispersion may be applied to form a conductive layer. The carbon nanotube dispersion is generally prepared by dispersing carbon nanotubes as well as a solvent through a mixer or an ultrasonic irradiation apparatus. Furthermore, any dispersant is preferably added thereto.

Such a dispersant may be selected from natural polymers and synthetic polymers, in aspects of: adhesiveness to a substrate of a conductive layer containing carbon nanotubes, which are prepared by applying carbon nanotube dispersion to the substrate and drying the same; film hardness; scratch resistance. Further, a cross-linking agent may also be added thereto, without departing from a range in which dispersibility is not deteriorated.

The synthetic polymer may include, for example; polyetherdiol, polyesterdiol, polycarbonatediol, polyvinyl alchol, partially-saponified polyvinyl alcohol, acetoacetyl group-modified polyvinyl alcohol, acetal group-modified polyvinyl alcohol, butyral group-modified polyvinyl alcohol, silanol group-modified polyvinyl alcohol, ethylene vinyl alcohol copolymer, ethylene vinyl alcohol-vinyl acetate copolymer resin, dimethylamino ethyl acrylate, dimethylamino ethyl methacrylate, acryl resin, epoxy resin, modified epoxy resin, phenoxy resin, modified phenoxy resin, phenoxy ether resin, phenoxy ester resin, fluorine resin, melamine resin, alkyd resin, phenol resin, polyacrylamide, polyacrylic acid, polysthylene sulfonic acid, polyethyleneglycol, polyvinyl pyrrolidone, and the like. The natural polymers may be selected from, for example; polysaccharides such as starch, pullulan, dextran, dextrin, guar-gum, xanthan gum, amylose, amylopectin, alginic acid, Arabic gum, carageenan, chondroitin sulfate, hyaluronic acid, curdlan, chitin, chitosan, cellulose, and derivatives thereof. The derivative may refer to a compound known in the art such as ester and ether. The foregoing materials may be used alone or as a mixture of two or more thereof. Among those, polysaccharides and their derivatives are preferably used since they have excellent dispersible properties in relation to carbon nanotubes. In addition, cellulose and its derivatives have high film formation ability, thus being preferable. Among those, ester or ether derivatives are more preferably used. In particular, carboxymethyl cellulose or salts thereof are suitably used.

Moreover, a mixing ratio of the carbon nanotubes and the dispersant is adjustable. The mixing ratio between the carbon nanotubes and the dispersant is preferably determined within a range in which it does not incur problems in adhesiveness to a substrate, hardness, scratch resistance, or the like. More particularly, the carbon nanotubes are preferably present in the range of 10 through 90% by weight in relation to a total weight of the conductive layer. More preferably, the carbon nanotubes are contained in the range of 30 to 70% by weight. If an amount of the carbon nanotubes is 10% or more by weight, conductivity required for a touch panel may be easily attained. In addition, when applying the above carbon nanotubes to the surface of a substrate, it may be easily and homogeneously applied thereto without repelling. Moreover, a conductive laminate with favorable external appearance and quality may be supplied with high conductivity. When the amount of carbon nanotubes is 90% or less by weight, the carbon nanotubes may have good dispersibility in a solvent and a difficulty in aggregation, and may easily form a favorable carbon nanotube coating layer and attain high conductivity, thereby being preferable. Furthermore, a coating film may be rigid and hence hardly incur scratch defects in the manufacturing process, and may uniformly retain surface resistance, thereby being preferable.

The needle-shaped conductor may include a compound including a metal, carbon compound, metal compound, or the like. The metal may include, for example, elements belonging in Group IIA, IIIA, IVA, VA, VIA, VIIA, VIII, IB, IIB, IIIB, IVB or VB in the standard periodic table of chemical elements. More particular examples are gold, platinum, silver, nickel, stainless steel, copper, brass, aluminum, gallium, zirconium, hafnium, vanadium, niobium, tantalum, chromium, molybdenum, manganese, antimony, palladium, bismuth, technetium, rhenium, iron, osmium, cobalt, zinc, scandium, boron, gallium, indium, silicon, germanium, tellurium, tin, magnesium, and alloys containing the same. The carbon compound may include carbon nanohorn, fullerene, graphene, and the like. The metal oxide may include $InO_2$, $InO_2Sn$, $SnO_2$, $ZnO$, $SnO_2$-$Sb_2O_4$, $SnO_2$-$V_2O_5$, $TiO_2(Sn/Sb)O_2$, $SiO_2(Sn/Sb)O_2$, $K_2O$-$nTiO_2$-$(Sn/Sb)O_2$, $K_2O$-$nTiO_2$-C, and the like.

The conductive laminate of the present invention preferably includes silver nanowires as a needle-shaped conductor, in view of optical properties such as transparency and conductivity.

The needle-shaped conductor may include, for example: composite compounds of potassium titanate fibers, tin, and antimony oxides, that is, WK200B, WK300R, WK500 among DENTALL WK Series (manufactured by Otsuka Chemical Co. Ltd.); composite compounds of silicon dioxide fibers, tin, and antimony oxides, that is, TM100 or the like among DENTALL TM Series (manufactured by Otsuka Chemical Co. Ltd.), all of which are commercially available in the market.

The conductive laminate of the present invention preferably has a surface resistivity at the conductive layer side which is $1 \times \times 10^0$ $\Omega$/ or more, and $1 \times 10^4$ $\Omega$/ or less, more preferably, $1 \times 10^1$ $\Omega$/ or more $1.5 \times 10^3$. Since the surface resistivity is present in the range of $1 \times 10°$ $\Omega$/ or more and $1 \times 10^4$ $\Omega$/ or less, the foregoing laminate is preferably used as a conductive laminate for a touch panel. That is, when it is equal to or more than $1 \times 10^0$ $\Omega$/, power consumption may be decreased. Further, with $1 \times 10^4$ $\Omega$/ or less, it is possible to reduce influence of errors occurring in reading coordinates of the touch panel.

Simultaneous with modification of the base resin layer, the conductive layer stacked thereon may also be modified. Since the conductive layer is modified, an area of a contact face contributing to conduction of current by such modified conductive layer may be increased and, as a result, a total flow rate of current is increased even when a small input load is applied, and hence is presumed that input sensitivity may become excellent. However, the present invention is not particularly limited to the above presumption.

The conductive laminate of the present invention is preferably a transparent conductive laminate having a total luminous transmittance of 80% or more, on the basis of JIS K7361-1 (1997) when the light is incident at the conductive layer side, as described above. If the conductive laminate of the present invention, which is a transparent conductive laminate, is assembled into a touch panel, the touch panel may exhibit not only favorable writing sense and input sensitivity but also excellent transparency. Further, it is possible to clearly recognize indications on a display mounted on a bottom layer of the touch panel including such a transparent conductive laminate. Transparency described in the present invention may refer to a total luminous transmittance of 80% or more, on the basis of JIS K7361-1 (1997) when the light is incident at the conductive layer side, as described above. The total luminous transmittance is preferably 85% or more and, more preferably, 90% or more. Methods of increasing the total luminous transmittance may include, for example; increasing the total luminous transmittance of a substrate to be used, considerably decreasing a film thickness of the conductive layer, a method of stacking a transparent protection layer to function as a light interference film, further above the conductive layer provided on the base resin layer, and the like. The method of increasing the total luminous transmittance may include a method of decreasing a thickness of the substrate or a method of selecting a substrate made of materials having high total luminous transmittance.

The conductive laminate of the present invention is preferably fabricated by a process to form a conductive layer on a base resin layer, after the base resin layer is formed on a substrate, in which the base resin layer includes a urethane acrylate resin having a glycol skeleton and a grafted resin having a hydrophilic group in a side chain. More preferably, the conductive laminate of the present invention may include a conductive layer formed by applying water dispersion including carbon nanotubes or silver nanowires and drying the same.

The substrate and/or individual layers used in the present invention may further include a variety of additives without departing from a range in which effects of the present invention are not inhibited. As the additives, for example, organic and/or inorganic micro-particles, a cross-linking agent, flame retardant, a flame retardant support, a heat resistant stabilizer, an anti-oxidant stabilizer, a leveling agent, an slipping enhancer, a conducting agent, an anti-static agent, UV absorber, a light stabilizer, a nucleating agent, dye, filler, a dispersant, and a coupling agent, and the like, may be used.

The conductive laminate of the present invention may preferably include a protection layer formed on a conductive layer.

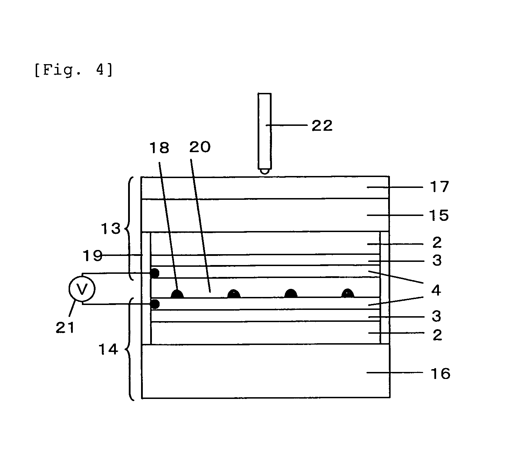

The conductive layer reflects or absorbs light by physical properties of a conductive component itself. Therefore, in order to improve a total luminous transmittance of a transparent conductive laminate including the conductive layer provided on a substrate, a transparent protection layer is provided on the conductive layer, in which the transparent protection layer is prepared of a transparent material to form an optical interference film, and hence, a mean reflectance at a wavelength in the range of 380 to 780 nm at the optical interference film is preferably decreased to 4% or less. The wavelength in the range of 380 to 780 nm at the optical interference film side is preferably 3% or less and, more preferably, 2% or less. If the mean reflectance is 4% or less, a total luminous transmittance of 80% or more may be obtained with high productivity when the conductive laminate is used for a touch panel or the like, thus being preferable. Further, if the transparent protection layer is present, interference fringe occurring due to interference of reflected light between top and bottom of the touch panel illustrated in FIG. 4 while interposing a space 5 therebetween, may be inhibited, thus being preferable.

In the conductive laminate of the present invention, the transparent protection layer, which forms an optical interference film on the conductive layer, is more preferably a transparent protection film that concurrently functions to improve scratch-resistance of the conductive layer and prevent the conductive component from escaping, in addition to the role of optical interference.

In order to decrease the mean reflectance, the transparent protection layer preferably has a lower refractive index than that of the conductive layer. More particularly, the transparent protection layer is preferably used if a difference of its reflective index to the refractive index of the conductive layer is 0.3 or more and, more preferably, 0.4 or more. With regard to the reflective index of the transparent protection layer, when the difference in refractive indexes is 0.3 or more, a control range to render the mean reflectance of the transparent protection layer to 4% or less may be extended and a manufacturing process margin may also be enlarged, thus being preferable.

The transparent protection layer may include an inorganic compound, an organic compound, and a composite of inorganic and organic compounds and, hence, may include a configuration having hollow therein. Examples of a single compound may include: inorganic compounds such as silicon oxide, magnesium fluoride, cerium fluoride, lanthanum fluoride, and calcium fluoride; and organic compounds such as polymer containing silicon or fluorine; or the like. Examples of the composite may include a mixture of: micro-particles having hollow therein, such as silica and acryl; and mono-functional or multi-functional (meth) acrylic acid ester, a siloxane compound, and/or a polymer prepared by polymerization of a monomer component in an organic compound having a perfluoroalkyl group.

Particular examples of the silicon oxide may include: tetraalkoxysilanes such as tetramethoxysilane, tetraethoxysilane, tetra-n-propoxysilane, tetra-i-propoxysilane, tetra-n-butoxysilane; trialkoxysilanes such as methyl trimethoxysilane, methyl triethoxylsilane, ethyl trimethoxysilane, ethyl triethoxysilane, n-propyl trimethoxysilane, n-propyl triethoxylsilane, i-propyl trimethoxysilane, i-propyl triethoxysilane, n-butyl trimethoxysilane, n-butyl triethoxylsilane, n-pentyl trimethoxysilane, n-pentyl triethoxysilane, n-hexyl trimethoxysilane, n-heptyl trimethoxylsilane, n-octyl trimethoxysilane, vinyl trimethoxysilane, vinyl triethoxysilane, cyclohexyl trimethoxysilane, cyclohexyl triethoxysilane, phenyl trimethoxysilane, phenyl triethoxysilane, N-(2-aminoethyl)-3-aminopropyl trimethoxysilane, N-(2-aminoethyl)-3-aminopropyl triethoxysilane, 3-chloropropyl trimethoxysilane, 3-chloropropyl triethoxysilane, 3,3,3-trifluoropropyl trimethoxysilane, 3,3,3-trifluoropropyl triethoxysilane, 3-aminopropyl trimethoxysilane, 3-aminopropyl triethoxysilane, 2-hydroxyethyl trimethoxysilane, 2-hydroxyethyl triethoxysilane, 2-hydroxypropyl trimethoxysilane, 2-hydroxypropyl triethoxysilane, 3-hydroxypropyl trimethoxysilane, 3-hydroxypropyl triethoxysilane, 3-mercaptopropyl trimethoxysilane, 3-mercaptopropyl triethoxysilane, 3-isocyanatopropyl trimethoxysilane, 3-isocyanatorpropyl triethoxysilane, 3-glycidoxypropyl trimethoxysilane, 3-glycidoxypropyl triethoxysilane, 2-(3,4-epoxycyclohexyl)ethyl trimethoxysilane, 2-(3,4-epoxycylcohexyl)ethyl triethoxysilane, 3-(meth)acryloxypropyl trimethoxysilane, 3-(meth)acryloxypropyl triethoxysilane, 3-ureidopropyl trimethoxysilane, 3-ureidopropyl triethoxysilane, vinyl trimethoxysilane, vinyl triethoxysilane, aryl trimethoxysilane, vinyl triacetoxysilane; organo-alkoxysilanes such as methyl triacetyloxysilane and methyl triphenoxysilane, in which the silicon oxide is introduced in any of various solvents such as alcohol, water, and acid, and hydrolyzed to prepare a coating solution. Polymerizing the coating solution may result in a coating layer such as a sol-gel coating layer or, otherwise, a deposition layer or sputtered layer of the silicon oxide may also be used.

The composite using silica micro-particles having hollow therein may include, in particular, OPSTER (registered trademark) TU-2180 (manufactured by JSR Corporation).

As methods of forming the base resin layer, the conductive layer, and the transparent protection layer on the conductive layer according to the present invention, the optimum method may be selected depending upon the material produced therefrom, and general methods such as dry methods such as vacuum deposition, EB deposition, sputtering; wet-coating methods such as casting, spin coating, dip coating, bar coating, spray, blade coating, slit-die coating, gravure coating, reverse coating, screen printing, mold coating, print transfer, and ink-jet may be employed. Among these, slit-die coating which can uniformly laminate the base resin layer, conductive layer and transparent protection layer while hardly incurring scars on the conductive layer or, otherwise, a wet coating process using a micro-gravure to uniformly form each of the base resin layer, conductive layer and transparent protection layer with high productivity, may be preferably used. The conductive laminate of the present invention is preferably fabricated by a method that forms the transparent protection layer in more preferable form on the conductive layer.

Next, the following description will be given of explaining a touch panel according to the present invention. FIG. 4 is a schematic cross-sectional view illustrating one example of a resistive film type touch panel. The resistive film type touch panel includes a top electrode 13 secured to a bottom electrode 14 by using a frame-shaped double-sided adhesive tape 19. Substrates 15 and 16 form the top and bottom electrodes, respectively, and each may be provided with a base resin layer 2 and a conductive layer 3, which are stacked in sequential order, and the conductive layers 3 of the top and bottom electrodes are opposed to each other while interposing a space 20 therebetween and formed into a facial shape. Further, above the conductive layer 3 in the substrate 15 or 16, a transparent protection layer 4 may be placed. The space 20 may have dot spacers 18 arranged at a constant interval and, hence, a gap between the conductive layers at top and bottom sides may be maintained owing to the foregoing configuration. The top surface of the substrate 15 is a face, which comes into contact with a pen 22 or finger tip, and may be provided with a hard coating layer 17 configured to prevent scratch. In the touch panel described above, by applying voltage from a power supply 21 and pressing the surface of the hard coating layer 17 with the pen 22 or finger tip, a desired load thereon may render electricity to flow through the contact part. The touch panel configured as described above may include, for example, a lead wire and a driving unit, and be combined with a front face of a liquid crystal display and used.

The resistive film type touch panel illustrated in FIG. 4 is configured while interposing a space 20 therein, so that the base resin layer is deformed by a load applied when inputting with a pen or finger and, hence, writing sense and input sensitivity of the touch panel may be noticeably and effectively improved, thereby resulting in the touch panel configured to attain maximum effects by the use of the conductive laminate of the present invention.

Examples

Hereinafter, the present invention will be concretely described on the basis of the following examples. Assessment methods used in respective examples and comparative examples are described below.

(1) Identification of bonding states and structures of individual layers

First, a sample was immersed in a solvent to delaminate and extract respective layers and the used solvent was filtered after the immersion. If a filtrate is present, a solvent having a high solubility in relation to the filtrate was selected and the filtrate was dissolved again in the solvent. Next, after adopting any separable method among typical chromatography techniques, which are representative of; silica gel column chromatography, gel permeation chromatography, liquid high performance chromatography, gas chromatography, or the like, the filtrate and the re-dissolved filtrate solution were separated and purified into single materials, respectively. In the case where these materials are combined with other components and entail difficulties in separation, they were used directly.

Thereafter, each of the materials was suitably concentrated and/or diluted and structural identification was executed by any method suitably selected from nuclear magnetic resonance spectroscopy ($^1$H-NMR, $^{13}$C-NMR), two-dimensional nuclear magnetic resonance spectroscopy (2D-NMR), infrared spectro-photometry (IR), Raman spectroscopy, mass spectrometry (Mass), X-ray diffraction (XRD), neutron diffraction (ND), low-energy electron diffraction (LEED), reflection high-energy electron diffraction (RHEED), atomic absorption spectrometry (AAS), UV photo-electron spectroscopy (UPS), X-ray photo-electron spectroscopy (XPS), X-ray fluorescence analysis (XRF), inductively coupled plasma-atomic emission spectroscopy (ICP-AES), electron probe micro-analyzer (EPMA), gel permeation chromatography (GPC), and other elementary analysis methods, and/or in combination with two or more thereof.

(2) Surface resistivity $R_o$

With regard to surface resistance at the conductive layer side, the center part of a sample with a size of 100 mm $\times$ 50 mm was measured by means of a low resistivity meter Loresta-EP MCP-T36P (manufactured by Mitsubishi Chemical Corporation) using a four point probe method. The mean of the measured values of five (5) samples was calculated and the calculated value was defined as 'surface resistivity $R_0$'.

(3) Durability

Each of the samples in the above (2) was heated in a constant-temperature over equipped with a safe door, that is, safety oven (trade name: SPHH-201, manufactured by Espec Corp.) at 150°C for 1 hour, followed by measurement of surface resistivity R at the same position again, according to the same procedures as described in the above (2) and calculation of $R/R_0$ ($R_0$ was determined in the above (2)). The same procedures were implemented for five samples and the mean of the calculated $R/R_0$ values was defined as an increase rate of the surface resistivity and used as an indication of durability. The foregoing results were assessed on the basis of the following standards of assessment.

Grade A:    $R/R_0 \leq 1.5$
Grade B:    $1.5 < R/R_0 \leq 1.8$
Grade C:    $R/R_0 > 1.8$

Herein, if the sample ranks Grade A or B, it is considered to satisfy the standards and Grade A is most preferable.

(4) Thickness T of substrate, thickness t of base resin layer

Each sample was cut off in a direction perpendicular to a plane of the sample, using a rotary microtome with a knife slope angle of 3° (manufactured by Nihon Microtome Laboratory Co. Ltd.). The cut side of the prepared sample piece was observed by a scanning electron microscope ABT-32 (manufactured by TOPCON Corporation) in which three magnifications were any ones selected from the observation magnification ranging from 2,500 to 10,000 times, image contrast was suitably adjusted, and the sample was observed at each of the selected magnifications. Based on the obtained photographs of the cut face, five positions corresponding to each of the substrate and the base resin layer, were measured at each of any three magnifications, same as described above (calculated at a high magnification). The mean values of the calculated values at total 15 positions were defined as thicknesses T and t, respectively (corresponding to the substrate and the base resin layer).

(5) Structure of conductive component

The surface of a sample at the conductive layer side was observed by using an electric field radiation type scanning electron microscope (trade name: JSM-6700-F, manufactured by JEOL Ltd.) at acceleration voltage of 3.0 kV or, otherwise, an atomic force microscope (trade name: Nano Scope III, manufactured by Digital Instruments). In the case where the sample cannot be observed by surface observation, after separating and purifying components of the conductive layer according to any of the same procedures as described in the above (1), a material corresponding to the conductive component was extracted and collected, followed by observation, like as described above.

(6) Total luminous transmittance

According to JIS K 7361-1 (1997) using a turbidity meter (or a haze meter) NDH 2000 (manufactured by Nippon Denshoku Industries Co. Ltd.), a total luminous transmittance of a conductive laminate in a thickness direction was measured while emitting incident light at the conductive layer side. Five samples were subjected to measurement, and the mean of the measured values was calculated. The calculated mean was defined as the total luminous transmittance.

(7) Writing sense and input sensitivity of touch panel

With regard to the invention, indications of writing sense and input sensitivity were ON load [g] and contact resistance value [kΩ]. ON load refers to, for example, a minimum load at which a touch panel firstly displays contact resistance described below and with which the touch panel can be operated, when applying the load to the touch panel with a pen 22 illustrated in FIG. 4, and hence meaning that the touch panel may be operated with even a small force by which a small ON load is generated. The above ON load is an indication of writing sense. In addition, the contact resistance may refer to a resistance value when applying a load, for example, when electricity flows on a face coming into contact with top and bottom electrodes illustrated in FIG. 4. If the top and bottom electrodes do not contact to each other through a space 20 interposed therebetween, it becomes insulated state and, hence, the contact resistance value becomes infinite while current does not flow. The contact resistance value is an indication, meaning that, as the contact resistance is decreased, the touch panel may be operated with better input sensitivity.

ON load and contact resistance value was determined as follows. First, with regard to the touch panel illustrated in FIG. 4, a touch panel having a dimension of 70 mm (length) $\times$ 100 mm (width) was fabricated by using an ITO-containing conductive glass (manufactured by Touch Panel Laboratories) as the bottom electrode 14, and a conductive laminate in each of the examples according to the invention and the comparative examples as the top electrode. Next, a surface property measurement device HEIDON TRIBOGEAR, type: HEIDON-14 DR (manufactured by Shinto Scientific Co. Ltd.) was used; a polyacetal pen 0.8R having a radius of 0.8 mm at a pen tip (manufactured by Touch Panel Laboratories) was set to a sample holder of a load unit mounted on the measurement device; and the fabricated touch panel was placed on the sample holder such that the pen tip is located at the center position of the touch panel (35 mm at a longitudinal position, 50 mm at a transversal position). When a weight was placed on the load unit by 1 g to reach 300 g and load was applied thereto using a pen, the contact resistance was read each time of loading. Further, the weight exhibiting the contact resistance at first was defined as ON load. Likewise, three samples and three times for each sample were subjected to measurement, that is, measurement was performed total nine times and the mean of the measured results was defined as contact resistance value and ON load according to the invention.

(8) External appearance of conductive laminate

The conductive layer side of the conductive laminate was visibly observed in a 90° direction relative to the conductive side (vertical), 45° direction, and 10° direction, respectively, under a fluorescent lamp. As the standards of assessment used in the invention, whether defects of the conductive layer (for example, repelling) are visibly observed was determined, and results thereof were assessed based on the following standards of assessment.

> Grade A: No defect present in all angular directions
> Grade B: Defects present in some of angular directions
> Grade C: Defects present in all angular directions

Herein, if the sample ranks Grade A or B, it is considered to satisfy the standards and Grade A is most preferable.

(9) Refractive index

With regard to a coating film formed on a silicon wafer or crystal glass by a coater, variation in polarized status of reflected light of the coating film was determined at incident angles of 60°, 65°, and 70°, using a high energy spectroscopic meter M 2000 (manufactured by J. A. Woollam Corporation), and a refractive index at 550 nm was calculated with an analytical soft WVASE 32.

(10) Film thickness of transparent protection layer

A film thickness of a transparent protection film in the fabricated transparent conductive laminate was observed at each of any three magnifications by using an electric field radiation type scanning electron microscope (trade name: JSM-6700-F, manufactured by JEOL Ltd.) at acceleration voltage of 3.0 kV, in which three magnifications were randomly selected from the observation magnification ranging from 10, 000 to 200, 000, image contrast was suitably adjusted. A cross-section of the sample was adjusted using the microtome described in the above (4). Based on the obtained photographs of the cross-section, any five positions were measured at each of any three magnifications (calculated at a high magnification). From the measured values at total 15 positions, the mean was calculated.

(11) Mean reflectance

If a transparent protection layer is provided, the mean reflectance was determined according to the following procedure.

A surface opposed to a transparency measurement face (a face at which the transparent protection layer was provided) was uniformly roughed using No. 320 to 400 water-proof sandpaper to obtain a glossing degree at 60° (JIS Z 8741 (1997)) of 10 or less, and then, coated and colored with a black paint until a visible light transmittance reaches 5% or less. After placing the measurement face on a spectrophotometer (trade name: UV-3150, manufactured by Shimadzu Corporation), absolute reflectance spectrum in a wavelength region ranging from 300 nm to 800 nm was measured at an interval of 1 nm and with an incident angle of 5° to the measurement face, and the mean reflectance at the wavelength in the range of 380 to 780 nm was determined.

Resins, photo-polymerization initiators, and films used in the examples and comparative examples are described as follows.

(1) Resin A

Art Resin LPVC-3 (manufactured by Negami Chemical Industrial Co. Ltd., polypropyleneglycol skeleton 2-functional urethane acrylate, solid content of 100% by weight).

(2) Resin B

CHEMITORY (registered trademark) L-20 (manufactured by Soken Chemical and Engineering Co. Ltd., grafted acryl having a hydroxyl group (-OH) as a hydrophilic group in a side chain, solution with solid content of 26% by weight).

(3) Resin C

Art Resin UN-7600 (manufactured by Negami Chemical Industrial Co. Ltd., polyester skeleton 2-functional urethane acrylate, solid content of 100% by weight).

(4) Resin D

Aronics (registered trademark) M240 (manufactured by TOA GOSEI Co. Ltd., polyethyleneglycol skeleton 2-functional acrylate, solid content of 100% by weight).

(5) Resin E

Aronics (registered trademark) M270 (manufactured by TOA GOSEI Co. Ltd., polypropyleneglycol skeleton 2-functional acrylate, solid content of 100% by weight).

(6) Resin F

TRSC-006 (Manufactured by Negami Chemical Industrial Co. Ltd., polypropyleneglycol skeleton 2-functional urethane, solution with solid content of 58.8% by weight).

(7) Resin G

X-22-8114 (manufactured by Shin-Etsu Chemical Co. Ltd., grafted acryl containing silicon with a methyl group ($-CH_3$) or n-butyl group ($-CH_2CH_2CH_2CH_3$) at a side chain, solution with solid content of 40% by weight).

(8) Photo-polymerization initiator

Ciba IRGACURE (registered trademark) 184 (Ciba Japan Co. Ltd.).

(9) Film

Polyethylene terephthalate film, Lumirror (registered trademark) U46 (manufactured by TORAY Industries).
Conductive layers used in the examples and comparative examples are described as follows.

(1) Conductive layer A "carbon nanotube conductive layer"

(Control of catalyst)

2.459 g of Ammonium iron citrate (green) (manufactured by Wako Pure Chemical Industries, Ltd.) was dissolved in 500 mL of methanol (manufactured by Kanto Chemical Co. Ltd.). 100 g of light magnesia (manufactured by Iwatani Chemical Industry Co. Ltd.) was added to the solution. The prepared mixture was agitated at room temperature for 60 minutes, then, vacuum dried to remove methanol while agitating at a temperature ranging from 40°C to 60°C, resulting in a catalyst including a metal salt supported by the light magnesia.

(Preparation of carbon nanotube composition)

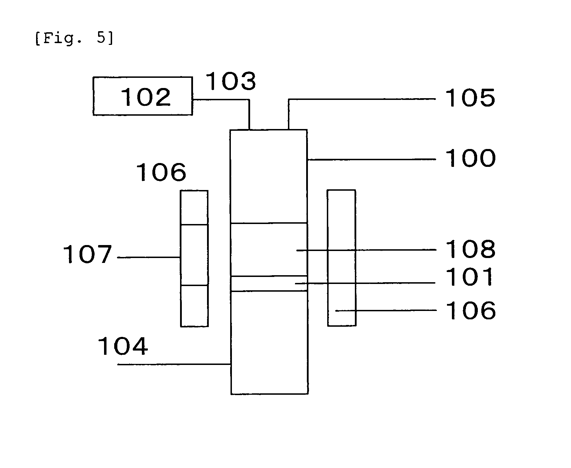

A vertical fluidized bed reactor illustrated in the schematic view of FIG. 5 was used to synthesize carbon nanotubes. A reactor 100 is a cylindrical quartz tube having an inner diameter of 32 mm and a length of 1200 mm. A quartz sintered plate 101 is provided in the center of the tube and an inert gas and raw gas supply line 104 is provided at the lower part of the tube while an exhaust gas line 105 and a catalyst loading line 103 are mounted on the upper part of the tube. In addition, in order to maintain the reactor at a certain temperature, a heater 106 winding around the radius of the reactor is also provided. The heater 106 is provided with an inspection door 107 in order to confirm flow condition in the reactor.

12 g of the catalyst was used, passed from a closed catalyst supplier 102 through the catalyst loading line 103, and a catalyst 108 described in the above 'control of catalyst' section was set on the quartz sintered plate 101. Next, it started to supply an argon gas from the raw gas supply line 104 at 1000 mL/min. After rendering the reactor to be under argon gas atmosphere, the temperature was increased to 850°C by heating.

After reaching 850°C, the temperature was retained and a flow rate of argon from the raw gas supply line 104 was increased to 2000 mL/min to start fluidizing of a solid catalyst on the quartz sintered plate. After confirming the fluidization through the inspection door 107 of the furnace, it started to supply methane to the reactor at 95 mL/min. After feeding the mixed gas for 90 minutes, it was changed into the flow of argon gas alone to terminate the synthesis process.

Heating was terminated and the product was left to rest till room temperature. After reaching room temperature, a carbon nanotube composition containing the catalyst and carbon nanotubes was taken out from the reactor.

23.4 g of the catalyst-containing carbon nanotube composition described above was placed on a magnetic dish, heated in a muffle furnace pre-heated to 446°C (manufactured by Yamato Scientific Co. Ltd., FP 41) under atmosphere and at 446°C for 2 hours, and then, taken out from the muffle furnace. Next, in order to remove the catalyst, the carbon nanotube composition was added to 6 N hydrochloride acid solution and agitated at room temperature for 1 hour. A material recovered after filtration was further added to 6 N hydrochloride acid solution and agitated at room temperature for 1 hour. This solution was filtered and washed with water several times, and the filtrate was dried in an oven at 120°C overnight, thereby resulting in 57.1 mg of a carbon nanotube composition free from magnesia and metals. The foregoing operation was repeated to prepare 500 mg of the carbon nanotube composition free from magnesia and metals.

Next, 80 mg of the carbon nanotube composition, from which the catalyst was removed by heating the composition in the muffle furnace, was added to 27 mL of concentrated nitric acid (manufactured by Wako Pure Chemical Industries, Ltd., Grade 1 Assay 60 to 61%), and heated in an oil bath at 130°C for 5 hours under agitation. After terminating the heating and agitation, a nitric acid solution containing carbon nanotubes was filtered and washed with distilled water, resulting in 1266.4 mg of a wet carbon nanotube composition containing water as it stands.

(Carbon nanotube dispersed coating solution)

10 mg of the carbon nanotube composition (conversion of drying time) described above and 10 mg of sodium carboxymethyl cellulose (manufactured by Sigma Corporation, 90 kDa, 50 to 200 cps) as a dispersant were placed in a 50 mL vessel, followed by adding distilled water thereto to become 10 g. Thereafter, using an ultrasonic homogenizer at output power of 20 W, the prepared material was dispersed for 20 minutes under ice to thereby prepare a carbon nanotube coating solution. The obtained solution was centrifuged in a high speed centrifugal separator with 10000 G for 15 minutes, and then, 9 mL of a supernatant was obtained. The operation was repeated several times to obtain 145 mL of the supernatant, and 5 mL of ethanol was added thereto, thereby resulting in a carbon nanotube dispersed coating solution (a mixing ratio of carbon nanotube to dispersant is 1 : 1) containing carbon nanotubes with a concentration of about 0.1% by weight that enables the solution to be applied by a coater. The carbon nanotube dispersed coating solution was applied to a quartz glass and dried, thus preparing a carbon nanotube conductive layer having a refractive index of 1.82.

(Formation of carbon nanotube conductive layer)

The carbon nanotube dispersed coating solution was applied by means of a micro-gravure coater (gravure line No. 100R or 150R, gravure rotation rate of 80%) and dried at 100°C for 1 minutes, thus forming a carbon nanotube coating film.

(2) Conductive layer B "Silver nanowire conductive layer"

According to the method described in Example 1 of WO 2007/022226 (synthesis of silver nanowire), silver nanowires were obtained. Next, according to the method described in Example 8 of WO 2007/022226 (dispersion of nanowires), a silver nanowire dispersed coating solution was prepared. This silver nanowire dispersed coating solution was applied by using a bar coater (manufactured by Matsuo Sangyo Co., Ltd.) and dried at 120°C for 2 minutes, thus forming a silver nanowire coating film.

(3) Conductive layer C "ITO conductive layer"

Using an indium/tin oxide target with constitutional composition of $In_2O_2/SnO_2$ = 90/10, an ITO conductive thin film having a thickness of 250 nm was formed by a sputtering process at a vacuum degree of $10^{-4}$ Torr and under introduction of argon/oxygen mixed gas.

Transparent protection layers used in the examples and comparative examples are described below. The transparent protection layer was stacked on the conductive layer according to any of methods described in the examples and comparative examples.

(1) Transparent protection layer material A

In 100 mL polymer vessel, 20 g of ethanol was introduced and 40 g of n-butyl silicate was added thereto, and the mixture was agitated for 30 minutes. Next, after adding 10 g of 0.1 N hydrochloride acid solution thereto, agitation was conducted for 2 hours (hydrolysis reaction), and the solution was stored at 4°C. Next day, the solution was diluted using isopropyl alcohol/toluene/n-butanol mixed solution (a mixing ratio by weight of 2/1/1) until a solid content reaches 1.0, 1.2, and 1. 5% by weight. The prepared solution was applied on a silicon wafer and dried to thereby form a silicon oxide-based transparent protection layer having a refractive index of 1.44.

(2) Transparent protection layer material B

Acryl-base UV curing low refractive index material TU-2180 (10% by weight solid content) containing hollow silica particles, manufactured by JSR Corporation, was diluted with methylethylketone until the solid content reaches 1.5% by weight. The prepared solution was applied to a silicon wafer and dried to thereby form a silicon oxide-based transparent protection layer having a refractive index of 1.37.

Example 1

A 'film' having a thickness of 188 $\mu$m was used as a substrate, KAYANOVA (registered trademark) FOP 1740 (manufactured by Nippon Kayaku Co., Ltd., solid content of 82% by weight) was diluted with toluene and methylethylketone at a ratio by weight of 1 : 1, to the solid content of 40% by weight and hence prepare a hard coating agent, the hard coating agent was applied to one face of the substrate by a micro-gravure coater (gravure line No. 80R, gravure rotation rate 100%) and dried at 80°C for 1 minute, followed by UV irradiation at 1.0 J/cm$^2$ and curing to thereby form a hard coating layer having a thickness of 5 $\mu$m.

Next, 1.40 g of 'resin A', 13.85 g of 'resin B', and 2. 00 g of ethyl acetate were mixed and agitated to prepare a base resin layer coating solution. Using a bar coater No. 30 (manufactured by Matsuo Sangyo Co. , Ltd.), the coating solution was applied to the other face opposed to the face of the substrate, on which the hard coating layer was provided, followed by heating and drying at 100°C for 3 minutes, thereby forming a base resin layer having a coating thickness of 13 $\mu$m after drying.

Then, 'conductive layer A' was stacked on the base resin layer by gravure line No. 150R, thus resulting in a conductive laminate of the invention.

Example 2

Except that a base resin layer coating solution has the constitutional composition of; 1.40 g of 'resin A', 13.96 g of 'resin B', 0.041 g of 'photo-polymerization initiator', and 2. 08 g of ethyl acetate and, after applying and drying a coating solution, UV ray was radiated at 1.2 J/cm$^2$, the sample procedure as described in Example 1 was executed and 'conductive layer A' was stacked on the base resin layer having a coating thickness of 13 $\mu$m after drying, by gravure line No. 150R, thus resulting in a conductive laminate.

Example 3

A 'film' having a thickness of 188 $\mu$m was used as a substrate, KAYANOVA (registered trademark) FOP 1740 (manufactured by Nippon Kayaku Co., Ltd., solid content of 82% by weight) was diluted with toluene and methylethylketone at a ratio by weight of 1 : 1, to the solid content of 40% by weight and hence prepare a hard coating agent, the hard coating agent was applied to one face of the substrate by a micro-gravure coater (gravure line No. 80R, gravure rotation rate 100%) and dried at 80°C for 1 minute, followed by UV irradiation at 1.0 J/cm$^2$ and curing to thereby form a hard coating layer having a thickness of 5 $\mu$m.

Next, 3.48 g of 'resin A', 8.92 g of 'resin B', and 7.59 g of ethyl acetate were mixed and agitated to prepare a base resin layer coating solution. Using a bar coater No. 30 (manufactured by Matsuo Sangyo Co. , Ltd.), the base resin layer coating solution was applied to the other face opposed to the face of the substrate, on which the hard coating layer was provided, followed by heating and drying at 100°C for 3 minutes, thereby forming a base resin layer having a coating thickness of 13 $\mu$m after drying.

Then, 'conductive layer B' was stacked on the base resin layer, thus resulting in a conductive laminate of the invention.

Example 4

A 'film' having a thickness of 125 $\mu$m was used as a substrate, KAYANOVA (registered trademark). FOP 1740 (manufactured by Nippon Kayaku Co., Ltd., solid content of 82% by weight) was diluted with toluene and methylethylketone at a ratio by weight of 1 : 1, to the solid content of 40% by weight and hence prepare a hard coating agent, the hard coating agent was applied to one face of the substrate by a micro-gravure coater (gravure line No. 80R, gravure rotation rate 100%) and dried at 80°C for 1 minute, followed by UV irradiation at 1.0 J/cm$^2$ and curing to thereby form a hard coating layer having a thickness of 5 $\mu$m.

Next, 3.64 g of 'resin A', 1. 38 g of 'resin B', and 14.97 g of ethyl acetate were mixed and agitated to prepare a base resin layer coating solution. Using a bar coater No. 24 (manufactured by Matsuo Sangyo Co. , Ltd.), the base resin layer coating solution was applied to the other face opposed to the face of the substrate, on which the hard coating layer was provided, followed by heating and drying at 100°C for 3 minutes, thereby forming a base resin layer having a coating thickness of 7 $\mu$m after drying. Then, 'conductive layer B' was stacked on the base resin layer, thus resulting in a conductive laminate of the invention.

Example 5

The same procedure as described in Example 4 was executed and 'conductive layer B' was stacked on a base resin layer having a thickness of 7 $\mu$m after drying, except that the base resin layer coating solution has the constitutional composition of; 3. 84 g of 'resin A' , 0. 62 g of 'resin B' , and 15. 55 g ethyl acetate, thus resulting in a conductive laminate of the invention.

Example 6

A 'film' having a thickness of 125 $\mu$m was used as a substrate, KAYANOVA (registered trademark) FOP 1740 (manufactured by Nippon Kayaku Co., Ltd., solid content of 82% by weight) was diluted with toluene and methylethylketone at a ratio by weight of 1 : 1, to the solid content of 40% by weight and hence prepare a hard coating agent, the hard coating agent was applied to one face of the substrate by a micro-gravure coater (gravure line No. 80R, gravure rotation rate 100%) and dried at 80°C for 1 minute, followed by UV irradiation at 1.0 J/cm$^2$ and curing to thereby form a hard coating layer having a thickness of 5 $\mu$m.

Next, 1.40 g of 'resin A', 13.96 g of 'resin B', 0.041 g of 'photo-polymerization initiator', and 9.95 g of ethyl acetate were mixed and agitated to prepare a base resin layer coating solution. Using a bar coater No. 24 (manufactured by Matsuo Sangyo Co., Ltd.), the base resin layer coating solution was applied to the other face opposed to the face of the substrate, on which the hard coating layer was provided, heated and dried at 100°C for 3 minutes, followed by UV irradiation at 1.2 J/cm$^2$ and curing, thereby forming a base resin layer having a coating thickness of 7 $\mu$m.

Then, 'conductive layer A' was stacked on the base resin layer by gravure line No. 150R, thus resulting in a conductive laminate of the invention.

Example 7

Except that a base resin layer coating solution has the constitutional composition of; 1.80 g of 'resin A', 8.48 g of 'resin B', 0.043 g of 'photo-polymerization initiator', and 9.92 g of ethyl acetate and after applying and drying a coating solution, UV ray was radiated at 1.2 J/cm$^2$, the sample procedure as described in Example 6 was executed and 'conductive layer A' was stacked on the base resin layer having a coating thickness of 7 $\mu$m, by gravure line No. 150R, thus resulting in a conductive laminate of the invention.

Example 8

Except that a base resin layer coating solution has the constitutional composition of; 1.00 g of 'resin A', 16.40 g of 'resin B', 0.030 g of 'photo-polymerization initiator', and 9.04 g of ethyl acetate and after applying and drying a coating solution, UV ray was radiated at 1.2 J/cm$^2$, the sample procedure as described in Example 6 was executed and 'conductive layer A' was stacked on the base resin layer having a coating thickness of 7 $\mu$m, by gravure line No. 150R, thus resulting in a conductive laminate of the invention.

Example 9

Except that a base resin layer coating solution has the constitutional composition of; 0.80 g of 'resin A', 18.90 g of 'resin B', 0.024 g of 'photo-polymerization initiator', and 8.97 g of ethyl acetate and after applying and drying a coating solution, UV ray was radiated at 1.2 J/cm$^2$, the sample procedure as described in Example 6 was executed and 'conductive layer A' was stacked on the base resin layer having a coating thickness of 7 $\mu$m, by gravure line No. 150R, thus resulting in a conductive laminate of the invention.

Example 10

A 'film' having a thickness of 125 $\mu$m was used as a substrate, KAYANOVA (registered trademark) FOP 1740 (manufactured by Nippon Kayaku Co., Ltd., solid content of 82% by weight) was diluted with toluene and methylethylketone at a ratio by weight of 1 : 1, to the solid content of 40% by weight and hence prepare a hard coating agent, the hard coating agent was applied to one face of the substrate by a micro-gravure coater (gravure line No. 80R, gravure rotation rate 100%) and dried at 80°C for 1 minute, followed by UV irradiation at 1.0 J/cm$^2$ and curing to thereby form a hard coating layer having a thickness of 5 $\mu$m.

Next, 0.50 of 'resin A', 19.44 g of 'resin B', 0.015 g of 'photo-polymerization initiator', and 0.67 g of ethyl acetate were mixed and agitated to prepare a base resin layer coating solution. Using a bar coater No. 26 (manufactured by Matsuo Sangyo Co. , Ltd.), the base resin layer coating solution was applied to the other face opposed to the face of the substrate, on which the hard coating layer was provided, heated and dried at 100°C for 3 minutes, followed by UV irradiation at 1.2 J/cm$^2$ and curing, thereby forming a base resin layer having a coating thickness of 10.5 $\mu$m.

Then, 'conductive layer A' was stacked on the base resin layer by gravure line No. 150R, thus resulting in a conductive laminate of the invention.

Example 11

A 'film' having a thickness of 125 $\mu$m was used as a substrate, KAYANOVA (registered trademark) FOP 1740 (manufactured by Nippon Kayaku Co., Ltd., solid content of 82% by weight) was diluted with toluene and methylethylketone at a ratio by weight of 1 : 1, to the solid content of 40% by weight and hence prepare a hard coating agent, the hard coating agent was applied to one face of the substrate by a micro-gravure coater (gravure line No. 80R, gravure rotation rate 100%) and dried at 80°C for 1 minute, followed by UV irradiation at 1.0 J/cm$^2$ and curing to thereby form a hard coating layer having a thickness of 5 $\mu$m.

Next, 1.00 of 'resin A', 9.89 g of 'resin B', 0. 030 g of 'photo-polymerization initiator', and 7.09 g of ethyl acetate were mixed and agitated to prepare a base resin layer coating solution. Using a bar coater No. 16 (manufactured by Matsuo Sangyo Co., Ltd.), the base resin layer coating solution was applied to the other face opposed to the face of the substrate, on which the hard coating layer was provided, heated and dried at 100°C for 3 minutes, followed by UV irradiation at 1.2 J/cm$^2$ and curing, thereby forming a base resin layer having a coating thickness of 4.8 $\mu$m.

Then, 'conductive layer A' was stacked on the base resin layer by gravure line No. 150R, thus resulting in a conductive laminate of the invention.

Example 12

The same procedure as described in Example 11 was executed to form a conductive laminate of the invention, except that 'conductive layer A' to be laminated was stacked by gravure line No. 100R.

Example 13

'Transparent protection layer material A' coating solution having a solid content of 1.0% by weight was applied to 'conductive layer A' in Example 6 by a micro-gravure coater (gravure line No. 80R, gravure rotation rate 100%), followed by drying at 125°C for 1 minute to form a transparent protection layer having a thickness of 60 nm, resulting in a conductive laminate of the invention.

Example 14

'Transparent protection layer material A' coating solution having a solid content of 1.2% by weight was applied to 'conductive layer A' in Example 6 by a micro-gravure coater (gravure line No. 80R, gravure rotation rate 100%), followed by drying at 125°C for 1 minute to form a transparent protection layer having a thickness of 75 nm, resulting in a conductive laminate of the invention.

Example 15

'Transparent protection layer material A' coating solution having a solid content of 1.5% by weight was applied to 'conductive layer A' in Example 6 by a micro-gravure coater (gravure line No. 80R, gravure rotation rate 100%), followed by drying at 125°C for 1 minute to form a transparent protection layer having a thickness of 100 nm, resulting in a conductive laminate of the invention.

Example 16

'Transparent protection layer material B' coating solution having a solid content of 1.5% by weight was applied to 'conductive layer A' in Example 6 by a micro-gravure coater (gravure line No. 120R, gravure rotation rate 100%) and dried at 80°C for 30 seconds, followed by UV irradiation at 1.2 J/cm$^2$ and curing to form a transparent protection layer having a thickness of 65 nm, resulting in a conductive laminate of the invention.

Example 17

'Transparent protection layer material B' coating solution having a solid content of 1.5% by weight was applied to 'conductive layer A' in Example 6 by a micro-gravure coater (gravure line No. 80R, gravure rotation rate 100%) and dried at 80°C for 30 seconds, followed by UV irradiation at 1.2 J/cm$^2$ and curing to form a transparent protection layer having a thickness of 100 nm, resulting in a conductive laminate of the invention.

Comparative Example 1

A 'film' having a thickness of 188 μm was used as a substrate, KAYANOVA (registered trademark) FOP 1740 (manufactured by Nippon Kayaku Co., Ltd., solid content of 82% by weight) was diluted with toluene and methylethylketone at a ratio by weight of 1 : 1, to the solid content of 40% by weight and hence prepare a hard coating agent, the hard coating agent was applied to one face of the substrate by a micro-gravure coater (gravure line No. 80R, gravure rotation rate 100%) and dried at 80°C for 1 minute, followed by UV irradiation at 1.0 J/cm$^2$ and curing to thereby form a hard coating layer having a thickness of 5 μm. Then, a laminate was prepared without a base resin layer and a conductive layer provided on the other face opposed to the face of the substrate, on which a hard coating layer is provided.

Comparative Example 2

A 'film' having a thickness of 188 μm was used as a substrate, KAYANOVA (registered trademark) FOP 1740 (manufactured by Nippon Kayaku Co., Ltd., solid content of 82% by weight) was diluted with toluene and methylethylketone at a ratio by weight of 1 : 1, to the solid content of 40% by weight and hence prepare a hard coating agent, the hard coating agent was applied to one face of the substrate by a micro-gravure coater (gravure line No. 80R, gravure rotation rate 100%) and dried at 80°C for 1 minute, followed by UV irradiation at 1.0 J/cm$^2$ and curing to thereby form a hard coating layer having a thickness of 5 μm.
Next, 5.80 g of 'resin A', 0.174 g of 'photo-polymerization initiator' , and 14.63 g of ethyl acetate were mixed and agitated to prepare a base resin layer coating solution. Using a bar coater No. 30 (manufactured by Matsuo Sangyo Co., Ltd.), the base resin layer coating solution was applied to the other face opposed to the face of the substrate, on which the hard coating layer was provided, heated and dried at 100°C for 3 minutes, followed by UV irradiation at 1.2 J/cm$^2$ and curing, thereby forming only a base resin layer having a coating thickness of 13 μm and, which in turn, resulting in a laminate without a conductive layer.

Comparative Example 3

A 'film' having a thickness of 188 μm was used as a substrate, KAYANOVA (registered trademark) FOP 1740 (manufactured by Nippon Kayaku Co., Ltd., solid content of 82% by weight) was diluted with toluene and methylethylketone at a ratio by weight of 1 : 1, to the solid content of 40% by weight and hence prepare a hard coating agent, the hard coating agent was applied to one face of the substrate by a micro-gravure coater (gravure line No. 80R, gravure rotation rate 100%) and dried at 80°C for 1 minute, followed by UV irradiation at 1.0 J/cm$^2$ and curing to thereby form a hard coating layer having a thickness of 5 μm.

Next, 'conductive layer C' was directly stacked on the other face opposed to the face of the substrate, on which the hard coating layer is provided, without a base resin layer, to thereby form a conductive laminate.

Comparative Example 4

The same procedure as described in Comparative Example 3 was executed to form a conductive laminate, except that a conductive layer was 'conductive layer A' (stacked by gravure line No. 150R).

Comparative Example 5

The same procedure as described in Comparative Example 3 was executed to prepare a conductive laminate, except that a conductive layer was 'conductive layer B'.

Comparative Example 6

The same procedure as described in Example 1 was executed and 'conductive layer A' was stacked on a base resin layer having a coating thickness of 13 $\mu$m after drying by gravure line No. 150R, to form a conductive laminate, except that a resin to be used in the base resin layer coating solution was 'resin C'.

Comparative Example 7

The same procedure as described in Comparative Example 6 was executed to form a conductive laminate, except that 'conductive layer A' to be laminated was stacked by gravure line No. 100R.

Comparative Example 8

The same procedure as described in Example 2 was executed and 'conductive layer A' was stacked on a base resin layer having a coating thickness of 13 $\mu$m after drying by gravure line No. 150R, to form a conductive laminate, except that a resin to be used in the base resin layer coating solution was 'resin D'.

Comparative Example 9

The same procedure as described in Example 28 was executed and 'conductive layer A' was stacked on a base resin layer having a coating thickness of 13 $\mu$m after drying by gravure line No. 150R, to form a conductive laminate, except that a resin to be used in the base resin layer coating solution was 'resin E'.

Comparative Example 10

A 'film' having a thickness of 188 $\mu$m was used as a substrate, KAYANOVA (registered trademark) FOP 1740 (manufactured by Nippon Kayaku Co., Ltd., solid content of 82% by weight) was diluted with toluene and methylethylketone at a ratio by weight of 1 : 1, to the solid content of 40% by weight and hence prepare a hard coating agent, the hard coating agent was applied to one face of the substrate by a micro-gravure coater (gravure line No. 80R, gravure rotation rate 100%) and dried at 80°C for 1 minute, followed by UV irradiation at 1.0 J/cm2 and curing to thereby form a hard coating layer having a thickness of 5 $\mu$m.

Next, 1.00 g of 'resin F', 5.82 g of 'resin B', and 0.43 g of ethyl acetate were mixed and agitated to prepare a base resin layer coating solution. Using a bar coater No. 30 (manufactured by Matsuo Sangyo Co. , Ltd.), the base resin layer coating solution was applied to the other face opposed to the face of the substrate, on which the hard coating layer was provided, heated and dried at 100°C for 3 minutes, to thereby form a base resin layer having a coating thickness of 13 $\mu$m after drying.

Then, 'conductive layer A' was stacked on the base resin layer by gravure line No. 150R, thus forming a conductive laminate.

Comparative Example 11

A 'film' having a thickness of 188 $\mu$m was used as a substrate, KAYANOVA (registered trademark) FOP 1740 (manufactured by Nippon Kayaku Co., Ltd., solid content of 82% by weight) was diluted with toluene and methylethylketone at a ratio by weight of 1 : 1, to the solid content of 40% by weight and hence prepare a hard coating agent, the hard coating agent was applied to one face of the substrate by a micro-gravure coater (gravure line No. 80R, gravure rotation rate 100%) and dried at 80°C for 1 minute, followed by UV irradiation at 1.0 J/cm$^2$ and curing to thereby form a hard coating layer having a thickness of 5 $\mu$m.

Next, 1.00 g of 'resin F', 3.87 g of 'resin G', and 2.46 g of ethyl acetate were mixed and agitated to prepare a base resin layer coating solution. Using a bar coater No. 30 (manufactured by Matsuo Sangyo Co., Ltd.), the base resin layer coating solution was applied to the other face opposed to the face of the substrate, on which the hard coating layer was provided, heated and dried at 100°C for 3 minutes, to thereby form a base resin layer having a coating thickness of 13 $\mu$m after drying.

Then, although it was attempted to apply a carbon nanotube dispersed coating solution of 'conductive layer A' to the base resin layer, however, the base resin layer repelled the coating solution, thus causing a failure in laminating the conductive layer.

[Table 1]

| 0 | Base resin layer | | | | | | | Conductive layer | |
|---|---|---|---|---|---|---|---|---|---|
| | Resin | | | | | Grafted resin | | | |
| | Type | Skeleton | Number of functional group | Presence of bonding at acrylate part | Content (wt. %) | Functional group at side chain | Content (wt. %) | Component | Structure |
| Example 1 | Urethane acrylate | Polypropyleneglycol | Di-functional | No | 28 | Hydrophilic group | 72 | Carbon nanotube | Linear structure |
| Example 2 | Urethane acrylate | Polypropyleneglycol | Di-functional | Yes | 28 | Hydrophilic group | 72 | Carbon nanotube | Linear structure |
| Example 3 | Urethane acrylate | Polypropyleneglycol | Di-functional | No | 60 | Hydrophilic group | 40 | Silver nanowire | Linear structure |
| Example 4 | Urethane acrylate | Polypropyleneglycol | Di-functional | No | 91 | Hydrophilic group | 9 | Silver nanowire | Linear structure |
| Example 5 | Urethane acrylate | Polypropyleneglycol | Di-functional | No | 96 | Hydrophilic group | 4 | Silver nanowire | Linear structure |
| Example 6 | Urethane acrylate | Polypropyleneglycol | Di-functional | Yes | 28 | Hydrophilic group | 72 | Carbon nanotube | Linear structure |
| Example 7 | Urethane acrylate | Polypropyleneglycol | Di-functional | Yes | 45 | Hydrophilic group | 55 | Carbon nanotube | Linear structure |
| Example 8 | Urethane acrylate | Polypropyleneglycol | Di-functional | Yes | 19 | Hydrophilic group | 81 | Carbon nanotube | Linear structure |
| Example 9 | Urethane acrylate | Polypropyleneglycol | Di-functional | Yes | 14 | Hydrophilic group | 86 | Carbon nanotube | Linear structure |
| Example 10 | Urethane acrylate | Polypropyleneglycol | Di-functional | Yes | 9 | Hydrophilic group | 91 | Carbon nanotube | Linear structure |

[Table 2]

| | Base resin layer | | | | | | | Conductive layer | | Transparent protection layer | |
|---|---|---|---|---|---|---|---|---|---|---|---|
| | Resin | | | | | Grafted resin | | | | | |
| | Type | Skeleton | Number of functional group | Presence of bonding at acrylate part | Content (wt.%) | Functional group at side chain | Content (wt.%) | Component | Structure | Thickness [nm] | Difference in refractive index *1 |
| Example 11 | Urethane acrylate | Polypropyleneglycol | Di-functional | Yes | 28 | Hydrophilic group | 72 | Carbon nanotube | Linear structure | - | - |
| Example 12 | Urethane acrylate | Polypropyleneglycol | Di-functional | Yes | 28 | Hydrophilic group | 72 | Carbon nanotube | Linear structure | - | - |
| Example 13 | Urethane acrylate | Polypropyleneglycol | Di-functional | Yes | 28 | Hydrophilic group | 72 | Carbon nanotube | Linear structure | 60 | 0.38 |
| Example 14 | Urethane acrylate | Polypropyleneglycol | Di-functional | Yes | 28 | Hydrophilic group | 72 | Carbon nanotube | Linear structure | 75 | 0.38 |
| Example 15 | Urethane acrylate | Polypropyleneglycol | Di-functional | Yes | 28 | Hydrophilic group | 72 | Carbon nanotube | Linear structure | 100 | 0.38 |
| Example 16 | Urethane acrylate | Polypropyleneglycol | Di-functional | Yes | 28 | Hydrophilic group | 72 | Carbon nanotube | Linear structure | 65 | 0.45 |
| Example 17 | Urethane acrylate | Polypropyleneglycol | Di-functional | Yes | 28 | Hydrophilic group | 72 | Carbon nanotube | Linear structure | 100 | 0.45 |
| (*1) Difference in refractive index =refractive index of conductive layer - refractive index of transparent protection layer | | | | | | | | | | | |

[Table 3]

| | Base resin layer | | | | | | | Conductive layer | |
| --- | --- | --- | --- | --- | --- | --- | --- | --- | --- |
| | Resin | | | | | Grafted resin | | | |
| | Type | Skeleton | Number of functional group | Presence of bondings at acrylate part | Content (wt. %) | Functional group at side chain | Content (wt. %) | Component | Structure |
| Comparative Example 1 | — | — | — | — | — | — | — | — | — |
| Comparative Example 2 | Urethane acrylate | Polypropyleneglycol | Di-functional | Yes | 100 | — | — | — | — |
| Comparative Example 3 | — | — | — | — | — | — | — | ITO | — |
| Comparative Example 4 | — | — | — | — | — | — | — | Carbon nanotube | Linear structure |
| Comparative Example 5 | — | — | — | — | — | — | — | Silver nanowire | Linear structure |
| Comparative Example 6 | Urethane acrylate | Polyester | Di-functional | No | 28 | Hydrophilic group | 72 | Carbon nanotube | Linear structure |
| Comparative Example 7 | Urethane acrylate | Polyester | Di-functional | No | 28 | Hydrophilic group | 72 | Carbon nanotube | Linear structure |
| Comparative Example 8 | Acrylate | Polyethyleneglycol | Di-functional | Yes | 28 | Hydrophilic group | 72 | Carbon nanotube | Linear structure |
| Comparative Example 9 | Acrylate | Polypropyleneglycol | Di-functional | Yes | 28 | Hydrophilic group | 72 | Carbon nanotube | Linear structure |
| Comparative Example 10 | Urethane | Polypropyleneglycol | Di-functional | No | 28 | Hydrophilic group | 72 | Carbon nanotube | Linear structure |
| Comparative Example 11 | Urethane | Polypropyleneglycol | Di-functional | No | 28 | Hydrophilic group | 72 | Carbon nanotube | Linear structure |

[Table 4]

| | Laminate | | | | | Writing sense, input sensitivity of touch panel | | Durability | | Optical properties |
|---|---|---|---|---|---|---|---|---|---|---|
| | Configuration | | | Assessment of appearance | Surface resistivity R [$\Omega$/□] | ON load [g] | Contact resistance [k$\Omega$] | Assessment | $R/R_0$ | Total luminous transmittance |
| | Thickness T [$\mu$m] | Thickness t [$\mu$m] | t/T | | | | | | | |
| Example 1 | 188 | 13 | 0.069 | Grade A | 660 | 27 | 1.93 | Grade B | 1.7 | 82.8 |
| Example 2 | 188 | 13 | 0.069 | Grade A | 650 | 27 | 1.87 | Grade A | 1.4 | 82.9 |
| Example 3 | 188 | 13 | 0.069 | Grade A | 240 | 23 | 1.54 | Grade A | 1.1 | 90.1 |
| Example 4 | 125 | 7 | 0.056 | Grade B | 240 | 16 | 1.51 | Grade A | 1.1 | 90.1 |
| Example 5 | 125 | 7 | 0.056 | Grade C | 240 | 15 | 1.50 | Grade A | 1.2 | 90.2 |
| Example 6 | 125 | 7 | 0.056 | Grade A | 650 | 20 | 1.85 | Grade A | 1.4 | 82.9 |
| Example 7 | 125 | 7 | 0.056 | Grade B | 670 | 17 | 1.66 | Grade A | 1.5 | 82.2 |
| Example 8 | 125 | 7 | 0.056 | Grade A | 650 | 24 | 1.87 | Grade B | 1.6 | 82.6 |
| Example 9 | 125 | 7 | 0.056 | Grade A | 650 | 31 | 1.89 | Grade B | 1.8 | 82.7 |
| Example 10 | 125 | 10.5 | 0.084 | Grade A | 660 | 42 | 1.99 | Grade C | 2.9 | 82.9 |

[Table 5]

| | Laminate | | | | | Writing sense, input sensitivity of touch panel | | Durability | | Optical properties | |
|---|---|---|---|---|---|---|---|---|---|---|---|
| | Configuration | | | Assessment of appearance | Surface resistivity R [$\Omega/\square$] | ON load [g] | Catalyst resistance [k$\Omega$] | Assessment | $R/R_0$ | Total luminous transmittance [%] | Mean reflectance [%] |
| | Thickness T [$\mu$m] | Thickness t [$\mu$m] | t/T | | | | | | | | |
| Example 11 | 125 | 4.8 | 0.038 | Grade A | 650 | 36 | 1.97 | Grade A | 1.5 | 82.9 | — |
| Example 12 | 125 | 4.8 | 0.038 | Grade A | 410 | 33 | 1.30 | Grade B | 1.7 | 77.4 | — |
| Example 13 | 125 | 7 | 0.056 | Grade A | 710 | 20 | 1.86 | Grade A | 1.4 | 84.5 | 3.8 |
| Example 14 | 125 | 7 | 0.056 | Grade A | 850 | 22 | 1.87 | Grade A | 1.3 | 86.4 | 2.6 |
| Example 15 | 125 | 7 | 0.056 | Grade A | 890 | 24 | 1.89 | Grade A | 1.1 | 87.2 | 1.5 |
| Example 16 | 125 | 7 | 0.056 | Grade A | 990 | 21 | 1.85 | Grade A | 1.3 | 85.3 | 2.5 |
| Example 17 | 125 | 7 | 0.056 | Grade A | 1150 | 25 | 1.86 | Grade A | 1.2 | 87.6 | 1.6 |

[Table 6]

| | Laminate | | | | | Writing sense, input sensitivity of touch panel | | Durability | | Optical properties |
|---|---|---|---|---|---|---|---|---|---|---|
| | Configuration | | | Assessment of appearance | Surface resistivity R [Ω/□] | ON load [g] | contact resistance [kΩ] | Assessment | $R/R_0$ | Total luminous transmittance [%] |
| | Thickness T [μm] | Thickness t [μm] | t/T | | | | | | | |
| Comparative Example 1 | 188 | 0 | 0 | Grade A | Not measured | Not measured | Not measured | Not measured | Not measured | 91.3 |
| Comparative Example 2 | 188 | 13 | 0.069 | Grade A | Not measured | Not measured | Not measured | Not measured | Not measured | 91.0 |
| Comparative Example 3 | 188 | 0 | 0 | Grade A | 250 | 50 | 1.01 | Grade A | 1.0 | 89.0 |
| Comparative Example 4 | 188 | 0 | 0 | Grade A | 650 | 52 | 2.05 | Grade B | 1.8 | 82.8 |
| Comparative Example 5 | 188 | 0 | 0 | Grade A | 240 | 51 | 1.68 | Grade A | 1.1 | 90.1 |
| Comparative Example 6 | 188 | 13 | 0.069 | Grade C | 650 | 83 | 5.84 | Grade B | 1.8 | 82.7 |
| Comparative Example 7 | 188 | 13 | 0.069 | Grade C | 420 | 79 | 4.76 | Grade B | 1.8 | 77.2 |
| Comparative Example 8 | 188 | 13 | 0.069 | Grade B | 1020 | 91 | 5.90 | Grade B | 1.7 | 82.8 |
| Comparative Example 9 | 188 | 13 | 0.069 | Grade B | 650 | 67 | 3.75 | Grade A | 1.4 | 82.9 |
| Comparative Example 10 | 188 | 13 | 0.069 | Grade B | 650 | 74 | 4.44 | Grade B | 1.6 | 82.8 |
| Comparative Example 11 | 188 | 13 | 0.069 | Not applied | Not measured | Not measured | Not measured | Not measured | Not measured | 89.9 |

EP 2 500 170 A1

In Examples 1 to 17, it was possible to enhance writing sense and input sensitivity of a touch panel. Among those, in the case where a base resin layer was prepared by mixing an urethane acrylate, in which a glycol skeleton has a specific structure and the number of functional groups at an acrylate part is 2, as well as a grafted resin having a hydrophilic group in a side chain (Examples 1 to 3, 6, and 13 to 17), water dispersion including a conductive component with a linear structure could be applied and, in addition, writing sense and input sensitivity were remarkably enhanced. Moreover, when the acrylate part of the urethane acrylate resin was combined with another acrylate part (Examples 2, 6, and 13 to 17), favorable durability was successfully achieved.

On the other hand, if a conductive layer is not provided (Comparative Examples 1 and 2), a touch panel does not act. If a base resin layer was not provided (Comparative Examples 3 to 5), it exhibited poor writing sense and input sensitivity. In the case where a skeleton structure of an urethane acrylate resin in a base resin layer is not a glycol skeleton (Comparative Examples 6 and 7) or, otherwise, even though a grycol skeleton is present, the material having the above structure is not an urethane acrylate (Comparative Examples 8, 9, and 10), writing sense and input sensitivity were deteriorated. Furthermore, if a side chain of a grafted resin is a hydrophobic group, a water dispersed coating solution may not be applied, thus causing a failure in laminating a conductive layer (Comparative Example 11).

Industrial Applicability

The invention provides a conductive laminate with good writing sense and high input sensitivity to a touch panel, and favorable durability. Further, the conductive laminate may be used for electrode members, which are employed in display-related products such as a liquid crystal display, an organic electro-luminescence, and/or an electronic paper, a solar cell module, and the like.

Reference Signs List

1: Substrate
2: Base resin layer
3: Conductive layer
4: Transparent protection layer
5: Network polymer in main chain
6: Branched side chain
7: Hydrophilic group
8: Conductive face observed in a direction perpendicular to laminated face
9: One example of carbon nanotube (one example of linear structure)
10: One example of nanowire made of metal or metal oxide (one example of linear structure)
11: One example of needle-shaped crystal in the form of metal oxide whisker or fiber (one example of linear structure)
12: Conductive thin film
13: top electrode
14: bottom electrode
15: Substrate of top electrode
16: Substrate of bottom electrode
17: Hard coating layer
18: Dot spacer
19: Double-sided adhesive tape
20: Space
21: Power supply
22: Pen
100: Reactor
101: Quartz sintered plate
102: Closed catalyst supplier
103: Catalyst loading line
104: Raw gas supply line
105: Exhaust gas line
106: Heater
107: Inspection door
108: Catalyst

**Claims**

1. A conductive laminate comprising a base resin layer and a conductive layer on at least one surface of a substrate, by stacking in the sequential order of the base resin layer and the conductive layer from the substrate side, wherein the base resin layer comprises a urethane acrylate resin having a glycol skeleton, and a grafted resin having a hydrophilic group among side chains thereof.

2. The conductive laminate according to claim 1, wherein the conductive layer comprises carbon nanotubes.

3. The conductive laminate according to claim 1, wherein the glycol skeleton is a polyethyleneglycol skeleton and/or polypropyleneglycol skeleton.

4. The conductive laminate according to claim 1, wherein the urethane acrylate resin is a urethane acrylate resin of which the number of functional groups at an acrylate part in one urethane acrylate molecule is 2.

5. The conductive laminate according to claim 1, wherein the acrylate part of the urethane acrylate resin is combined with another acrylate part by polymerization.

6. The conductive laminate according to claim 1, wherein a ratio between a thickness T of the substrate and a thickness t of the base resin layer satisfies $0.040 \leq t/T \leq 0.080$.

7. The conductive laminate according to claim 1, wherein a total luminous transmittance is 80% or more according to JIS K7361-1 (1997) when light is incident from the conductive layer side.

8. The conductive laminate according to claim 1, wherein the substrate is a transparent substrate.

9. A method of producing a conductive laminate, comprising: forming a base resin layer on a substrate, and then, forming a conductive layer on the base resin layer, wherein the base resin layer comprises a urethane acrylate resin having a glycol skeleton and a grafted resin having a hydrophilic group among side chains.

10. The method of producing a conductive laminate according to claim 9, wherein the conductive layer is formed by applying water dispersion that contains carbon nanotubes or silver nanowires, and then, drying the same.

11. The method of preparing a conductive laminate according to claim 11, wherein a protection layer is provided on the conductive layer.

12. A touch panel comprising the conductive laminate according to claims 1 to 8.

[Fig. 1]

[Fig. 2]

[Fig. 3]

[Fig. 4]

[Fig. 5]

**INTERNATIONAL SEARCH REPORT**

| International application No. |
| --- |
| PCT/JP2010/069405 |

A. CLASSIFICATION OF SUBJECT MATTER
*B32B27/40*(2006.01)i, *H01B5/14*(2006.01)i, *H01B13/00*(2006.01)i

According to International Patent Classification (IPC) or to both national classification and IPC

B. FIELDS SEARCHED

Minimum documentation searched (classification system followed by classification symbols)
B32B1/00-43/00, B05D1/00-7/26, H01B5/00-5/16, H01B13/00-13/34

Documentation searched other than minimum documentation to the extent that such documents are included in the fields searched
Jitsuyo Shinan Koho        1922-1996    Jitsuyo Shinan Toroku Koho    1996-2010
Kokai Jitsuyo Shinan Koho  1971-2010    Toroku Jitsuyo Shinan Koho    1994-2010

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | JP 2009-302013 A  (NOF Corp.), 24 December 2009 (24.12.2009), claims; paragraphs [0025] to [0044] & CN 101630541 A        & KR 10-2009-0131250 A | 1-12 |
| A | JP 2000-79662 A  (Toyobo Co., Ltd.), 21 March 2000 (21.03.2000), claims; paragraphs [0031] to [0071] & TW 248872 B          & KR 10-2000-0006322 A & CN 1243062 A | 1-12 |
| A | JP 2002-98803 A  (Fuji Photo Film Co., Ltd.), 05 April 2002 (05.04.2002), claims; paragraphs [0017] to [0020] (Family: none) | 1-12 |

☒ Further documents are listed in the continuation of Box C.　☐ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search 07 December, 2010 (07.12.10) | Date of mailing of the international search report 21 December, 2010 (21.12.10) |
| --- | --- |
| Name and mailing address of the ISA/ Japanese Patent Office | Authorized officer |
| Facsimile No. | Telephone No. |

Form PCT/ISA/210 (second sheet) (July 2009)

**INTERNATIONAL SEARCH REPORT**

| International application No. |
| --- |
| PCT/JP2010/069405 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2008-4304 A  (Fujifilm Corp.),<br>10 January 2008 (10.01.2008),<br>claims; paragraphs [0031] to [0037]<br>(Family: none) | 1-12 |
| A | JP 2004-213990 A  (Toyobo Co., Ltd.),<br>29 July 2004 (29.07.2004),<br>claims; paragraphs [0021] to [0094]<br>(Family: none) | 1-12 |
| A | WO 2009/038183 A1  (Toyobo Co., Ltd.),<br>26 March 2009 (26.03.2009),<br>claims; paragraphs [0069] to [0148]<br>& CN 101802122 A          & KR 10-2010-0061547 A<br>& JP 2009-73937 A          & JP 2009-113420 A<br>& JP 2009-120675 A          & JP 2009-175266 A<br>& JP 2010-12753 A          & JP 2010-15506 A<br>& JP 2010-15507 A | 1-12 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008243532 A
- JP 2007042284 A
- JP 2009302013 A
- WO 2007022226 A